(19) Europäisches Patentamt
European Patent Office
Office européen des brevets

(11) **EP 4 564 572 A1**

(12) **EUROPEAN PATENT APPLICATION**
published in accordance with Art. 153(4) EPC

(43) Date of publication:
**04.06.2025 Bulletin 2025/23**

(21) Application number: 23945365.7

(22) Date of filing: **14.07.2023**

(51) International Patent Classification (IPC):
***H01M 50/417*** *(2021.01)*

(52) Cooperative Patent Classification (CPC):
Y02E 60/10

(86) International application number:
**PCT/CN2023/107562**

(87) International publication number:
**WO 2025/015466 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Shenzhen Senior Technology Material Co., Ltd.
  Shenzhen, Guangdong 518106 (CN)**
- **Changzhou Senior New Energy Material Co., Ltd.
  Changzhou, Jiangsu 213100 (CN)**

(72) Inventors:
- **CAI, Qi
  Shenzhen, Guangdong 518106 (CN)**

- **LIN, Lujing
  Shenzhen, Guangdong 518106 (CN)**
- **LIU, Mengquan
  Shenzhen, Guangdong 518106 (CN)**
- **XIAO, Wuhua
  Shenzhen, Guangdong 518106 (CN)**
- **XIONG, Di
  Shenzhen, Guangdong 518106 (CN)**
- **CHEN, Yiping
  Shenzhen, Guangdong 518106 (CN)**
- **LIN, Yulin
  Shenzhen, Guangdong 518106 (CN)**

(74) Representative: **PPR AG
BGZ
Rotenbodenstrasse 12
9497 Triesenberg (LI)**

(54) **MICROPOROUS SEPARATOR FOR LITHIUM BATTERY AND PREPARATION METHOD THEREOF**

(57) The present invention relates to a microporous separator for lithium battery and its preparation method. Specifically, the present invention provides a microporous separator for lithium battery, which is a single-layer porous membrane containing polyolefin resin, having excellent elastic recovery performance in both a machine direction and a transverse direction. The present invention further provides a preparation method for a separator for lithium-ion battery with high planar elastic recovery.

**Description**

**TECHNICAL FIELD**

The present invention relates to the technical field of lithium-ion batteries, specifically to a microporous separator for lithium battery and a preparation method thereof.

**BACKGROUND**

Polyolefin-based microporous membrane is widely used as a separation membrane for separation and selective permeation of various substances, and an isolation material, etc. For example, polyolefin-based microporous membrane is used as a precision filtration membrane, a separator for fuel cell, a separator for capacitor, a base material for functional membrane which is filled with functional materials in pores in order to show new functions, a separator for battery, etc. Among these applications, polyolefin-based microporous membrane is particularly suitable for use as a separator for lithium-ion batteries widely used in laptops, mobile phones, digital cameras, and the like. As its reason, it can be enumerated that the polyolefin-based microporous membrane has excellent membrane mechanical strength and shutdown characteristics.

In addition, for a microporous separator for lithium battery, good planar elastic recovery is also required.

However, the planar elastic recovery rate of commonly used polyolefin microporous membrane is low, especially for a separator for lithium battery prepared by a wet process, which has a planar elastic recovery rate lower than 14% in both transverse and machine directions. This may induce the irreversible deformation of the microporous membrane during battery assembly, leading to deviation of the microporous membrane from the design dimensions of battery and thus affecting the electrochemical safety performance.

At present, there is no microporous separator that combines high mechanical strength and good planar elastic recovery, and at the same time having small thickness, and excellent pore structure and surface. It is particularly difficult to obtain a wet-process separator for lithium-ion battery with excellent planar elastic recovery rate.

**SUMMARY**

The present invention can achieve a separator for lithium-ion battery with excellent planar elastic recovery rate, by controlling the proportion of a chain segment with low molecular weight in the microporous separator in the case that a commonly used polyolefin resin is used as the main raw material. In addition, the present invention also further solves the problem of high surface resistance of the separator, and the surface resistance of the separator for lithium-ion battery of the present invention is reduced by 20% or more compared to the prior art. Moreover, the pore diameter, air permeability, and mechanical strength of the separator of the present invention may also be accepted, making it suitable for use in lithium-ion batteries.

It is also found in the present invention that, by using a low-temperature multi-point distributed stretching process in a machine-direction (MD) stretching, using a low-temperature and low-ratio stretching in a transverse-direction (TD1) stretching, and controlling the difference between MD stretching ratio and TD1 stretching ratio, the above-mentioned separator can be obtained.

In some specific embodiments, the present invention provides a microporous separator for lithium battery, which is a single-layer porous membrane containing a polyolefin resin. The microporous separator has an intrinsic viscosity index of 700 ml/g - 1500 ml/g, preferably 900 ml/g - 1200 ml/g; a quantity proportion of polyolefin chain segment ingredients with a weight-average molecular weight below 100000 in the microporous separator of 15 mol% - 30 mol%, preferably 15 mol% - 25 mol%, or more preferably 15 mol% - 21 mol%; and the microporous separator has a machine-direction elastic recovery rate greater than or equal to 14%, preferably greater than or equal to 18%, and a transverse-direction elastic recovery rate greater than or equal to 14%, preferably greater than or equal to 18%, that are measured under a condition, the condition including: cutting a separator specimen strip with a width of 15 mm in the machine direction (MD direction) or the transverse direction (TD direction), stretching the separator specimen strip from $L_0$=100 mm in selected direction at a speed of 50 mm/min to 50% elongation, holding for 60 s, letting it stand to naturally retract for 3 min, then measuring its length $L_1$, and calculating the elastic recovery rate as a formula below:

$$\text{the elastic recovery rate} = (1.5 \times L_0 - L_1) / (0.5 \times L_0) \times 100\%.$$

Preferably, a quantity proportion of polyolefin chain segment ingredients with a weight-average molecular weight below 10000 in the microporous separator is 0.5 mol% - 2.5 mol%, preferably 0.5-1.5 mol%.

Preferably, the polyolefin resin has a molecular weight distribution of 3-6, preferably 3.5-5.0.

Preferably, the microporous separator satisfies one or more of the following:

   a. surface resistance of 0.2 Ω - 0.7 Ω, preferably 0.3 Ω - 0.6 Ω;
   b. average pore diameter of 25 nm - 50 nm, preferably 30 nm - 45 nm;
   c. thickness of 1 $\mu$m - 30 $\mu$m, preferably 4 $\mu$m - 12 $\mu$m;
   d. air permeability of 10 sec/100cc - 300 sec/100cc, preferably 60 sec/100cc - 170 sec/100cc;
   e. tensile strength in the MD direction or TD direction of 2000 kgf/cm$^2$ - 4000 kgf/cm$^2$, preferably 2800 kgf/cm$^2$ - 4000 kgf/cm$^2$.

Preferably, the polyolefin resin is selected from polyethylene (including, for example, LDPE, LLDPE, HDPE, UHDPE), polypropylene, polybutene, polymethylpentene, a copolymer thereof, or a mixture thereof.

Preferably, the quantity proportion of polyolefin chain segment ingredients with a weight-average molecular weight below 100000 in the polyolefin resin is 10 mol% - 30 mol%, preferably 10 mol% - 25 mol%, more preferably 13 mol% - 25 mol%, or further preferably 13 mol% - 20 mol%.

Preferably, the quantity proportion of polyolefin chain segment ingredients with a weight-average molecular weight below 10000 in the polyolefin resin is 0 mol% - 2 mol%, preferably 0.3 mol% - 1.0 mol%.

Preferably, the microporous separator is a separator prepared by a wet process.

In some specific embodiments, the present invention provides a preparation method for a microporous separator for lithium battery, including the following steps:

   (a) melting and blending a mixture containing a polyolefin resin and a plasticizer to form a melt;
   (b) extruding and solidifying the melt into a thick sheet;
   (c) stretching the thick sheet in a machine direction (MD direction) and in a transverse direction (TD direction) to obtain a stretched sheet;
   (d) removing the plasticizer from the stretched sheet, and drying to obtain the microporous separator for lithium battery;

where, in the polyolefin resin in step (a), a quantity proportion of polyolefin chain segment ingredients with a weight-average molecular weight below 100000 is 10 mol% - 30 mol%, preferably 10 mol% - 25 mol%, more preferably 13 mol% - 25 mol%, or further preferably 13 mol% - 20 mol%; and the polyolefin resin has an intrinsic viscosity index of 800 ml/g - 1600 ml/g, preferably 1000 ml/g - 1300 ml/g.

Preferably, in the polyolefin resin in step (a), the quantity proportion of polyolefin chain segment ingredients with a weight-average molecular weight below 10000 is 0 mol% - 2 mol%, preferably 0.3 mol% - 1.5 mol%.

Preferably, the polyolefin resin has a molecular weight distribution of 3-6, preferably 3.5-5.0.

Preferably, the quantity proportion of polyolefin chain segment ingredients with a weight-average molecular weight below 100000 in the microporous separator is 15 mol% - 30 mol%, preferably 15 mol% - 25 mol%, and more preferably 15 mol% - 21 mol%.

Preferably, the quantity proportion of polyolefin chain segment ingredients with a weight-average molecular weight below 10000 in the microporous separator is 0.5 mol% - 2.5 mol%, preferably 0.5 mol% - 1.5 mol%.

Preferably, the microporous separator has a machine-direction elastic recovery rate greater than or equal to 14%, preferably greater than or equal to 18%, and a transverse-direction elastic recovery rate greater than or equal to 14%, preferably greater than or equal to 18%, that are measured under a condition, the condition including: cutting a separator specimen strip with a width of 15 mm in the machine direction (MD direction) or the transverse direction (TD direction), stretching the separator specimen strip from $L_0$=100 mm in selected direction at a speed of 50 mm/min to 50% elongation, holding for 60 s, letting it stand to naturally retract for 3 min, then measuring its length $L_1$, and calculating the elasticity recovery rate as a formula below:

$$\text{the elasticity recovery rate} = (1.5 \times L_0 - L_1) / (0.5 \times L_0) \times 100\%.$$

Preferably, a weight ratio of the polyolefin resin to the plasticizer is between 15:85 and 45:55, preferably between 20:80 and 30:70, and more preferably 25:75.

Preferably, in step (a), an extruder is used for melting and blending, and preferably an extruder temperature is 160 °C - 250 °C and an extruder screw speed is 60 r/min - 100 r/min.

Preferably, in step (b), the mixture is extruded through a die and attached to a casting roller for cooling and solidifying to form a thick sheet, and the casting roller has a temperature of 20 °C - 30 °C.

Preferably, in step (c), the stretching in the machine direction adopts a stretching temperature of 80 °C - 120 °C and has a stretching ratio of 4-9, preferably 4-7; and the stretching is a multi-point distributed stretching, preferably 3-7 points.

Preferably, a preheating step is provided prior to the stretching in the machine direction, with a preheating temperature being 60 °C - 100 °C; preferably, the preheating is a preheating with gradient temperature rise, and the gradient temperature rise of the preheating is set in 2-4 stages, with a temperature difference between two adjacent gradients being 7 °C - 25 °C.

Preferably, in step (c), the stretching in the transverse direction (TD1) has a temperature of 90 °C - 125 °C, preferably 90 °C - 115 °C, and a stretching ratio of 4-8, preferably 4-6, and an absolute value of a difference between the stretching ratio in the machine direction and the stretching ratio in the transverse direction is below 1.

Preferably, in step (d), a step of a second stretching in transverse direction (TD2 stretching) is further included after the drying procedure, and the second stretching in transverse direction has a stretching temperature of 125 °C - 140 °C, preferably 130 °C - 140 °C, and a stretching ratio of 1.4-1.8.

Preferably, the polyolefin resin is selected from polyethylene (including, for example, LDPE, LLDPE, HDPE, UHDPE), polypropylene, polybutene, polymethylpentene, a copolymer thereof, or a mixture thereof.

## DESCRIPTION OF EMBODIMENTS

Before further describing the present invention, certain terms used in the description, embodiments, and appended claims are collected in the following paragraphs. The definitions listed herein should be read and understood by the person skilled in the art according to the remaining parts of the present invention. Unless otherwise defined, all technical and scientific terms used herein have the same meanings as those commonly understood by the person skilled in the art to which the present invention belongs.

The terms "one" and "another" as used herein, are only for descriptive purposes and should not be understood as indicating or implying relative importance or implicitly specifying the number of technical features indicated.

The term "approximate" as used herein, when referring to a value means to include its variations, such as ±10%, ±5%, ±1%, or ±0.1% of a specific value.

The term "substantially the same" as used herein, when referring to two values, means that the difference between the two values is less than 10%, 5%, or 1% of an average of the two values.

The term "polyolefin" as used herein, may be a polyolefin monomer (i.e., a single type of polyolefin), a polyolefin copolymer, or a polyolefin mixture.

The term "mixture" as used herein, refers to a physical mixture of two or more homopolymers with different molecular structures, two or more copolymers with different molecular structures, or both homopolymer and copolymer that have different molecular structures. Specifically, the mixture may include different polymers, i.e., including at least two polymers with different chemical properties (such as polyethylene, polypropylene, and/or ethylene-propylene copolymer with different chemical properties); and/or polymers with the same chemical properties but different characteristics (such as two different types of polyethylene with different characteristics (e.g., density, molecular weight, molecular weight distribution, rheology, additive (composition and/or percentage), etc.)).

The term "machine direction" as used herein, also known as MD direction, refers to a direction in which the device is operated.

The term "transverse direction" as used herein, also known as TD direction, refers to a direction perpendicular to a direction in which the device is operated.

A first aspect of the present invention provides a microporous separator for lithium battery, which is a single-layer porous membrane including polyolefin resin; and the microporous separator has an intrinsic viscosity index of 700 ml/g - 1500 ml/g, preferably 900 ml/g - 1200 ml/g; a quantity proportion of polyolefin chain segment ingredients with a weight-average molecular weight below 100000 in the microporous separator is 15 mol% - 30 mol%, preferably 15 mol% - 25 mol%, and more preferably 15 mol% - 21 mol%; and the microporous separator has a machine-direction elastic recovery rate greater than or equal to 14%, preferably greater than or equal to 18%, and a transverse-direction elastic recovery rate greater than or equal to 14%, preferably greater than or equal to 18%, that are measured under the following condition including: cutting a separator specimen strip with a width of 15 mm in the machine direction (MD direction) or the transverse direction (TD direction), stretching the separator specimen strip from $L_0$=100 mm in selected direction at a speed of 50 mm/min to 50% elongation, holding for 60 s, letting it stand to naturally retract for 3 min, then measuring its length $L_1$, and calculating the elastic recovery rate as a formula below:

$$\text{the elastic recovery rate} = (1.5 \times L_0 - L_1) / (0.5 \times L_0) \times 100\%.$$

Preferably, the upper limit value of the elastic recovery rate of the microporous separator measured under the above condition does not exceed 50%, preferably does not exceed 30%, and further preferably does not exceed 25%. By having the above-mentioned elastic recovery rate, the processing stability of the separator can be ensured, avoiding excessive resilience of the separator in the preparation process of the battery or separator, which may affect the manufacturing of the product.

According to some preferred embodiments of the present invention, the quantity proportion of polyolefin chain segment ingredients with a weight-average molecular weight below 10000 in the microporous separator is 0.5 mol% - 2.5 mol%, preferably 0.5 mol% - 1.5 mol%.

In the present invention, the polyolefin resin may be any polyolefin resin commonly used in the art for preparing a microporous separator for lithium battery. For example, it may be selected from polyethylene (including, for example, LDPE (Low-Density Polyethylene), LLDPE (Linear Low-Density Polyethylene), HDPE (High-Density Polyethylene), UHDPE (Ultra High-Density Polyethylene)), polypropylene, polybutene, polymethylpentene, a copolymer thereof, or a mixture thereof, with polyethylene and/or polypropylene being preferred.

According to the present invention, the polyolefin resin used is sufficient as long as it is capable of producing the microporous separator for lithium battery required by the present invention. In order to provide a microporous separator with high planar elastic recovery, it is preferred that the quantity proportion of polyolefin chain segment ingredients with a weight-average molecular weight below 100000 in the polyolefin resin is 10 mol% - 30 mol%, preferably 10 mol% - 25 mol%, more preferably 13 mol% - 25 mol%, and further preferably 13 mol% - 20 mol%. Preferably, the quantity proportion of polyolefin chain segment ingredients with a weight-average molecular weight below 10000 in the polyolefin resin is 0 mol% - 2 mol%, preferably 0.3 mol% - 1.0 mol%. Further preferably, a molecular weight distribution of the polyolefin resin is 3-6, preferably 3.5-5.0.

In some specific embodiments of the present invention, the microporous separator satisfies one or more of the following:

> a. surface resistance of 0.2 $\Omega$ - 0.7 $\Omega$, preferably 0.3 $\Omega$ - 0.6 $\Omega$;
> b. average pore diameter of 25 nm - 50 nm, preferably 30 nm - 45 nm;
> c. thickness of 1 $\mu$m - 30 $\mu$m, preferably 4 $\mu$m - 12 $\mu$m;
> d. air permeability of 10 sec/100cc - 300 sec/100cc, preferably 60 sec/100cc - 170 sec/100cc;
> e. tensile strength in the MD direction or TD direction of 2000 kgf/cm$^2$ -4000 kgf/cm$^2$, preferably 2800 kgf/cm$^2$ -4000 kgf/cm$^2$.

In order to obtain a microporous separator with high planar elastic recovery, the microporous separator of the present invention is preferably a separator prepared by a wet process.

A second aspect of the present invention provides a preparation method for a microporous separator for lithium battery, including the following steps:

> (a) melting and blending a mixture containing a polyolefin resin and a plasticizer to form a melt;
> (b) extruding and solidifying the melt obtained into a thick sheet;
> (c) stretching the thick sheet in a machine direction (MD direction) and in a transverse direction (TD direction) to obtain a stretched sheet;
> (d) removing the plasticizer from the stretched sheet, and drying to obtain the microporous separator for lithium battery;

where, in the polyolefin resin in step (a), a quantity proportion of polyolefin chain segment ingredients with a weight-average molecular weight below 100000 is 10 mol% - 30 mol%, preferably 10 mol% - 25 mol%, more preferably 13 mol% - 25 mol%, and further preferably 13 mol% - 20 mol%; and the polyolefin resin has an intrinsic viscosity index of 800 ml/g - 1600 ml/g, preferably 1000 ml/g - 1300 ml/g.

According to the present invention, by treatment of a mixture containing appropriate polyolefin resin and plasticizer according to the preparation method of the present invention, a microporous separator having high planar elastic recovery can be obtained, which is suitable for applications in lithium batteries.

In the present invention, the polyolefin resin may be any polyolefin resin commonly used in the art for preparing a microporous separator for lithium battery. For example, it may be selected from polyethylene (including, for example, LDPE, LLDPE, HDPE, UHDPE), polypropylene, polybutene, polymethylpentene, a copolymer thereof, or a mixture thereof, with polyethylene and/or polypropylene being preferred.

In the present invention, the plasticizer is a small molecule solvent that can dissolve the polyolefin resin. For example, it may be liquid paraffin, diethyl phthalate, palm oil, etc., preferably, liquid paraffin having a kinematic viscosity of 35 mm$^2$/s - 120 mm$^2$/s at 40 °C, and further preferably liquid paraffin having a kinematic viscosity of 40 mm$^2$/s - 55 mm$^2$/s at 40 °C. The testing method for kinematic viscosity is GB/T 265 method.

According to the present invention, in step (a), a weight ratio of the polyolefin resin to the plasticizer is preferably between 15:85 and 45:55, and more preferably between 20:80 and 30:70. Specifically, the weight ratio of the polyolefin resin to the plasticizer may be 20:80, 21:79, 22:78, 23:77, 24:76, 25:75, 26:74, 27:73, 28:72, 29:71, or 30:70, etc. By using the weight ratio of the polyolefin resin to the plasticizer mentioned above, the resilience performance in a plane direction of the microporous separator can be improved.

In order to further improve the resilience performance in the plane direction of the microporous separator, the quantity proportion of polyolefin chain segment ingredients with a weight-average molecular weight below 10000 in the polyolefin resin is 0 mol% - 2 mol%, preferably 0.3 mol% - 1.5 mol%. Preferably, the molecular weight distribution of the polyolefin resin is in a range of 3-6, preferably 3.5-5.0.

According to the present invention, in step (a), the treatment may be carried out using any of the existing methods capable of forming the mixture into a melt, for example, an extruder may be used for melting and blending. As some preferred embodiments, parameters of the extruder include: an extruder temperature of 150 °C - 250 °C, preferably 180 °C - 240 °C, and an extruder screw speed of 60 r/min - 100 r/min, preferably 70 r/min - 90 r/min.

According to the present invention, in step (b), the method of extruding and solidifying the melt into a thick sheet enables the formation of a thick sheet of a desired thickness. For example, the mixture may be extruded through a die and attached to a casting roller for cooling and solidifying to form a thick sheet, preferably, a casting roller temperature is 20 °C - 30 °C. In addition, the rolling speed of the casting roller may be 3 m/min - 8 m/min.

According to the present invention, in step (c), the stretched sheet is obtained by means of separate stretching in a machine direction (i.e., a machine-direction stretching, or MD stretching) and in a transverse direction (i.e., transverse-direction stretching, or TD1 stretching). Specifically, the machine-direction stretching may be carried out prior to the transverse-direction stretching, or the transverse-direction stretching may be carried out prior to the machine-direction stretching, with the former being preferred.

In order to further improve the resilience performance in the plane direction of the microporous separator, in step (c), the stretching in the machine direction adopts a stretching temperature of 80 °C - 120 °C and has a stretching ratio of 4-9, preferably 4-7; and the stretching in the machine direction is in a multi-point distributed mode, preferably 3-7 points. In the multi-point distributed stretching, a stretching point is a velocity ratio between two adjacent stretching rollers with different linear velocities, that is, a ratio of a rear-roller linear velocity to a front-roller linear velocity. The stretching ratio of each stretching point is 1.1-4. In the case of using multi-point distributed stretching, the stretching ratio refers to a sum of the stretching ratios at respective points, and it is preferred that each stretching ratio is independently 1.1-3, preferably 1.1-2.4. Preferably, there is at least one set of 3 adjacent stretching points, whose ratios are in an incremental relationship, and the absolute value of the difference between stretching ratios of the adjacent stretching points is greater than 0.1. For example, in the case of 3-point stretching, a distribution of the stretching ratios may be as follows: 1.3/1.6/1.9 or 1.5/1.9/2.0; in the case of 5-point stretching, the distribution of stretching ratios may be as follows: 1.1/1.4/2.0/2.4/1.1 or 1.1/1.6/2.0/2.1/1.1 or 1.3/1.3/1.6/2.1/1.3 or 1.1/1.1/1.4/1.6/2.0; in the case of 7-point stretching, the distribution of stretching ratios may be as follows: 1.1/1.1/1.2/1.3/1.4/1.55/1.6 or 1.1/1.2/1.4/1.7/1.2/1.1/1.1.

Generally, 3 adjacent points with incremental stretching ratios do not only exist in the last 3 stretching points in a stretching section. It is preferred that at least one of the front and middle sections of the stretching should be provided with 3 adjacent stretching points with an incremental ratio relationship.

The incremental stretching ratio in machine direction is more conducive to sufficient stretching and more sufficient orientation of polymer, so that the formed fibrils have better mechanical properties and more uniform size distribution, and thus the microporous separator has a better elastic recovery performance.

According to some further preferred embodiments of the present invention, a preheating step is provided prior to the stretching in the machine direction, with a preheating temperature being 60 °C - 100 °C. Preferably, the preheating is a preheating with gradient temperature rise, and the gradient temperature rise of the preheating may be set in 2-4 stages. It is preferred that a temperature difference between two adjacent gradients is 7 °C - 25 °C. The preheating time may be 2 s -100 s, preferably 4 s - 60 s. In the case of the preheating with gradient temperature rise, the preheating time of two adjacent gradients may be the same or different, for example each independently ranging from 1 s - 25 s.

In order to further improve the resilience performance in the plane direction of the microporous separator, in step (c), the stretching in the transverse direction has a temperature of 90 °C - 125 °C, preferably 90 °C - 115 °C, and a stretching ratio of 4-8, preferably 4-6. Moreover, it is preferred that the absolute value of the difference between the stretching ratio in the machine direction and the stretching ratio in the transverse direction is below 1, more preferably 0.2-0.9, or further preferably 0.4-0.8.

According to the present invention, in step (d), the plasticizer may be removed from the stretched sheet by any method, preferably by using an extraction agent to remove the plasticizer from the stretched sheet. In some embodiments, the extraction agent may be an alkane extraction agent, or a halogenated hydrocarbon extraction agent, for example dichloromethane.

As a method of removing the plasticizer from the stretched sheet by using an extraction agent, the plasticizer in the stretched sheet may be removed by means of circulation feed of the extraction agent. The preferred circulation feed rate of the extraction agent is 1 m$^3$/h -5 m$^3$/h. After extraction, the stretched sheet is heated for drying by means of one or more of a hot roller, a heating plate, or a hot air, with a preferred drying temperature of 20 °C - 150 °C.

According to a preferred embodiment of the present invention, in step (d), a step of a second transverse-direction stretching (TD2 stretching) is further included after the drying procedure, and the second transverse-direction stretching has a stretching temperature of 125 °C - 140 °C, preferably 130 °C - 140 °C, and a stretching ratio of 1.4-1.8.

By adopting the above preparation method for preparation of microporous separator, the quantity proportion of polyolefin chain segment ingredients with a weight-average molecular weight below 100000 in the obtained microporous separator is 15 mol% - 30 mol%, preferably 15 mol% - 25 mol%, and more preferably 15 mol% - 21 mol%. Preferably, the quantity proportion of polyolefin chain segment ingredients with a weight-average molecular weight below 10000 in the microporous separator is 0.5 mol% - 2.5 mol%, preferably 0.5 mol% - 1.5 mol%. Further, the microporous separator has a machine-direction elastic recovery rate greater than or equal to 14%, preferably greater than or equal to 18%, and a transverse-direction elastic recovery rate greater than or equal to 14%, preferably greater than or equal to 18%, that are measured under the following condition including: cutting a separator specimen strip with a width of 15 mm in the machine direction (MD direction) or the transverse direction (TD direction), stretching the separator specimen strip from $L_0$=100 mm in selected direction at a speed of 50 mm/min to 50% elongation, holding for 60 s, and then letting it stand to naturally retract for 3 min, then measuring its length $L_1$, and calculating the elastic recovery rate as a formula below:

$$\text{the elastic recovery rate} = (1.5 \times L_0 - L_1) / (0.5 \times L_0) \times 100\%.$$

A third aspect of the present invention provides a microporous separator for lithium battery obtained by the preparation method of the second aspect of the present invention.

In the following examples and comparative examples, the test methods for respective parameter are as follows.

(1) Detailed test method for elastic recovery rate

A test specimen strip with a width of 15 mm is cut along the MD or TD direction, and a section with a length of 100 mm is measured along the length direction of the test specimen strip and lines are drawn at two corresponding ends of the section, with the length being defined as $L_0$.

The test specimen strip is placed on the stretching device, and the stretching clamps are clamped at positions where lines are drawn (i.e., a distance between the chucks being 100 mm), with a stretching speed of 50 mm/min.

The length of the test specimen strip is stretched to 50% elongation and then held for 60 s. The test specimen strip is removed, placed at room temperature, and left to naturally retract for 3 minutes. Then, a distance between the lines drawn at the two ends is measured and recorded as $L_1$.

(2) The test method for surface resistance is as follows.

A total of 4 pieces of the separator specimens with a diameter of 45 mm are cut from a flat position and immersed in electrolyte (1.0 M $LiPF_6$ in a solvent of 1:1:1 EC/EMC/DMC by volume), and sealed and soaked for 30 min. Approximately 15 ml of 1 mol/L fresh electrolyte (1.0 M $LiPF_6$ in a solvent of 1:1:1 EC/EMC/DMC by volume) is poured into a surface resistance test fixture. The separators 1, 2, 3, and 4 are placed respectively in the fixture for testing. Based on that the number of layers of the separator is taken as a horizontal coordinate and the resistance value of the separator is taken as a vertical coordinate, a linear fitting is performed to determine a slope and a fitting degree of the straight line. When the fitting degree is greater than 0.999, the slope is the surface resistance of the separator.

(3) The average pore diameter is measured using PMI instrument (CFP-1500AE model, Jiayun Co., Ltd.) with an immersion solution *galwick* (its surface tension of 15.9 dynes/cm at 25 °C) under 25 °C, and the pore diameter is expressed in *nm*.

(4) The thickness is measured in accordance with the provisions of GB-T 36363-2018.

(5) The air permeability is determined in accordance with the provisions of GB/T 36363-2018, where a pressure of 1.21 kPa is applied and the time required for 100 ml of air to pass through a separator with an area of 6.45 cm$^2$ is determined.

(6) The tensile strength is measured in accordance with the provisions of GB/T1040.3-2006.

(7) The quantity proportion of polyolefin chain segments with a weight-average molecular weight below 100000, and the quantity proportion of polyolefin chain segments with a weight-average molecular weight below 10000 are measured in accordance with the provisions of GB/T 36214.4-2018.

(8) The molecular weight distribution is measured in accordance with the provisions of GB/T 36214.4-2018.

(9) The intrinsic viscosity is measured according to the provisions of ISO 1628-3.

Example 1

The polyethylene resin having an intrinsic viscosity of 1150 ml/g and a molecular weight distribution of 5.0 was mixed with a plasticizer (paraffin oil with a kinematic viscosity of 45 mm$^2$/s) at a weight ratio of 25:75, and then melted and blended through an extruder to form a melt; where, in the polyethylene resin, the quantity proportion of polyethylene chain segments with a weight-average molecular weight below 100000 was 17 mol%, and the quantity proportion of polyethylene chain segments with a weight-average molecular weight below 10000 was 0.8 mol%. The extruder temperature was 220 °C, and the extruder screw speed was 80 r/min.

The above-mentioned melt was cooled and solidified by a casting roller to form a thick sheet, with a temperature of casting roller of 25 °C. The obtained thick sheet was subjected to a three-stage preheating for temperature rise treatment: 60°C/80°C/100°C, with a total preheating time of 15 s. Then, the preheated thick sheet was subjected to a stretching treatment, where the stretching in the MD direction adopted 3-point distributed stretching mode, with a constant stretching temperature of 95 °C and a total stretching ratio of 6.29, and the stretching ratio distribution at respective points was as follows: 1.7/1.85/2.0; and the temperature for the transverse-direction stretching (TD1 stretching) was 110 °C, and the transverse-direction stretching ratio was 6.

After removing the plasticizer (paraffin oil) and drying with hot air at 55 °C, a second transverse-direction stretching (TD2 stretching) was carried out at a temperature of 133 °C, with a second stretching ratio of 1.4, and then heat setting treatment was performed at a temperature of 135 °C.

Examples 2 to 9 and Comparative Examples 1 to 3

The differences between the preparation methods for the microporous separator for battery involved in Examples 2 to 9 as well as in Comparative Examples 1 to 3 and the preparation method of Example 1 are detailed in Table 1, and the parts of Examples 2 to 9 as well as Comparative Examples 1 to 3 which are not embodied in Table 1 are the same as those in Example 1.

Example 10

The difference of Example 10 from Example 1 lies in that: the stretching in the MD direction adopted 5-point distributed stretching mode, with the constant stretching temperature of 95 °C and the total stretching ratio of 9.3. The stretching ratio distribution at respective points was as follows: 1.1/1.6/2.0/2.4/1.1. The temperature for the transverse-direction stretching (TD1 stretching) was 110 °C, and the transverse stretching ratio was 7.5.

Examples 2-1 to 2-4

The differences of Examples 2-1 to 2-4 from Example 2 are detailed in Table 2, and the parts of Examples 2-1 to 2-4 which are not embodied in Table 2 are the same as those in Example 2.

Table 1

| | | Microporous separator | | | Raw material | | | |
|---|---|---|---|---|---|---|---|---|
| | | Quantity proportion of polyolefin chain segments with a weight-average molecular weight below 100000 /% | Quantity proportion of polyolefin chain segments with a weight-average molecular weight below 10000 /% | Intrinsic viscosity /ml/g | Quantity proportion of polyolefin chain segments with a weight-average molecular weight below 100000 /% | Quantity proportion of polyolefin chain segments with a weight-average molecular weight below 10000 /% | Intrinsic viscosity /ml/g | Molecular weight distribution |
| | Example 1 | 20.2 | 1.1 | 1134 | 17 | 0.8 | 1150 | 5 |
| | Example 2 | 15 | 1.2 | 1141 | 13 | 0.8 | 1170 | 5 |
| | Example 3 | 30 | 1.1 | 1109 | 27 | 0.8 | 1130 | 5 |
| | Example 4 | 20.2 | 0.5 | 1131 | 17 | 0.3 | 1160 | 5 |
| | Example 5 | 20.3 | 1.5 | 1126 | 17 | 1.2 | 1145 | 5 |
| | Example 6 | 20.4 | 2.5 | 1053 | 17 | 2 | 1085 | 5 |

(continued)

| | Microporous separator | | | Raw material | | | |
|---|---|---|---|---|---|---|---|
| | Quantity proportion of polyolefin chain segments with a weight-average molecular weight below 100000 /% | Quantity proportion of polyolefin chain segments with a weight-average molecular weight below 10000 /% | Intrinsic viscosity /ml/g | Quantity proportion of polyolefin chain segments with a weight-average molecular weight below 100000 /% | Quantity proportion of polyolefin chain segments with a weight-average molecular weight below 10000 /% | Intrinsic viscosity /ml/g | Molecular weight distribution |
| Example 7 | 20.2 | 1.1 | 858 | 17 | 0.8 | 900 | 6 |
| Example 8 | 20.3 | 0.5 | 1263 | 17 | 0.3 | 1280 | 3.5 |
| Example 9 | 20.2 | 3.2 | 1067 | 17 | 2.7 | 1085 | 5 |
| Example 10 | 20.2 | 1.1 | 1124 | 17 | 0.8 | 1150 | 5 |
| Example 11 | 20.5 | 0.2 | 1147 | 16 | 0 | 1200 | 5 |
| Comparative Example 1 | 10.4 | 1.1 | 1668 | 7 | 0.7 | 1700 | 5 |
| Comparative Example 2 | 35 | 1.1 | 632 | 32 | 0.8 | 650 | 5 |

Table 1 (Continued)

| | Process | | Thickness /μm | Air permeability /sec/100cc | Surface resistance /Ω | Elastic recovery rate /% | | Tensile strength /kgf/cm$^2$ | |
|---|---|---|---|---|---|---|---|---|---|
| | Extruder temperature /°C | Extruder screw speed r/min | | | | MD | TD | MD | TD |
| Example 1 | 220 | 80 | 11 | 120 | 0.45 | 22.7 | 22.9 | 2958 | 2874 |
| Example 2 | 220 | 80 | 11 | 128 | 0.46 | 18.2 | 18.5 | 3560 | 3488 |
| Example 3 | 220 | 80 | 11 | 121 | 0.41 | 26.5 | 26 | 2310 | 2198 |
| Example 4 | 220 | 80 | 11 | 125 | 0.43 | 21.8 | 21.6 | 3010 | 2954 |
| Example 5 | 220 | 80 | 11 | 123 | 0.42 | 22.9 | 23.3 | 2800 | 2880 |
| Example 6 | 220 | 80 | 11 | 128 | 0.44 | 23 4 | 24.2 | 2290 | 2238 |
| Example 7 | 220 | 80 | 11 | 127 | 0.45 | 22.7 | 22.9 | 2210 | 2132 |
| Example 8 | 220 | 80 | 11 | 122 | 0.42 | 21.9 | 21.7 | 3159 | 3088 |
| Example 9 | 220 | 80 | 11 | 123 | 0.45 | 26.4 | 23.5 | 2098 | 2001 |
| Example 10 | 220 | 80 | 11 | 108 | 0.58 | 18 | 19.2 | 3498 | 2776 |
| Example 11 | 220 | 80 | 11 | 125 | 0.44 | 14.2 | 14 | 2950 | 2934 |
| Comparative Example 1 | 220 | 80 | 11 | 120 | 0.43 | 12 | 9.5 | 3800 | 3750 |
| Comparative Example 2 | 220 | 80 | 11 | 121 | 0.46 | 28.9 | 29.3 | 1850 | 1679 |

Table 2

| | Microporous separator | | Raw material | | | | Process | |
|---|---|---|---|---|---|---|---|---|
| | Quantity proportion of polyolefin chain segments with a weight-average molecular weight below 100000 /% | Quantity proportion of polyolefin chain segments with a weight-average molecular weight below 10000 /% | Quantity proportion of polyolefin chain segments with a weight-average molecular weight below 100000 /% | Quantity proportion of polyolefin chain segments with a weight-average molecular weight below 10000 /% | Intrinsic viscosity /ml/g | Molecular weight distribution | Extruder temperature r /°C | Extruder screw speed r/min |
| Example 2-1 | 15.3 | 1.2 | 13 | 0.8 | 1170 | 5 | 220 | 80 |
| Example 2-2 | 15.4 | 1.2 | 14 | 1 | 1150 | 5 | 220 | 55 |
| Example 2-3 | 12.6 | 2.2 | 9 | 0 | 1595 | 5 | 220 | 125 |
| Example 2-4 | 15.3 | 1.2 | 14 | 0.9 | 1150 | 5 | 180 | 70 |

Table 2 (Continued)

| | Thickness /μm | Air permeability /sec/100cc | Surface resistance /Ω | Elastic recovery rate /% | | Tensile strength /kgf/cm$^2$ | |
|---|---|---|---|---|---|---|---|
| | | | | MD | TD | MD | TD |
| Example 2-1 | 11 | 128 | 0.46 | 18.2 | 18.5 | 3560 | 3488 |
| Example 2-2 | 11 | 125 | 0.45 | 18.1 | 18.3 | 3598 | 3497 |
| Example 2-3 | 11 | 124 | 0.43 | 18.4 | 18.2 | 3504 | 3479 |
| Example 2-4 | 11 | 127 | 0.47 | 18.2 | 18.4 | 3575 | 3482 |

From Examples 1-11 and Comparative Examples 1-2 in Table 1, it can be seen that when the quantity proportion of polyolefin chain segment ingredients with a weight-average molecular weight below 100000 in the microporous separator is 15-30 mol%, the microporous separator has good elastic recovery rate (>14%), surface resistance, and mechanical strength (tensile strengths in MD and TD are both $\geq$ 2000 kgf/cm$^2$). However, when the quantity proportion of polyolefin chain segment ingredients with a weight-average molecular weight below 100000 in the microporous separator exceeds the above range, the elastic recovery rate and mechanical strength significantly decrease. From the comparison between Example 1 and Example 10, it can be seen that when the stretching ratios in MD and TD are increased, except for an increase in the tensile strength in MD, the tensile strength in TD slightly decreases, the elastic recovery rate decreases, and the surface resistance increases.

From Examples 2-1 to 2-4 in Table 2, it can be seen that the regulation of quantity proportion of polyolefin chain segments with a weight-average molecular weight below 100000 in the microporous separator can be achieved by mutual matching of the extruder process and the raw material.

Unless otherwise specified in the context, the singular forms of "a", "an", and "the" in the present description and appended claims include the plural forms. Unless otherwise defined, all technical and scientific terms used herein have the same meanings as those commonly understood by the person skilled in the art. In addition to the specific order disclosed, the methods described herein may be performed in any logically possible order.

The representative examples are intended to assist in illustrating the present invention, and are not intended or should not be interpreted as limiting the scope of the invention. In fact, in addition to those shown and described herein, various modifications and many other embodiments of the present invention will become apparent to the person skilled in the art, including the embodiments and references to the scientific and patent documents cited herein. The embodiments contain important additional information, examples, and guidance that may be practically employed by the present invention in its various embodiments and equivalents.

**Claims**

1. A microporous separator for lithium battery, wherein it is a single-layer porous membrane comprising a polyolefin resin; the microporous separator has an intrinsic viscosity index of 700 ml/g - 1500 ml/g, preferably 900 ml/g - 1200 ml/g; a quantity proportion of polyolefin chain segment ingredients with a weight-average molecular weight below 100000 in the microporous separator is 15 mol% - 30 mol%, preferably 15 mol% - 25 mol%, and more preferably 15 mol% - 21 mol%; and the microporous separator has a machine-direction elastic recovery rate greater than or equal to 14%, preferably greater than or equal to 18%, and a transverse-direction elastic recovery rate greater than or equal to 14%, preferably greater than or equal to 18%, that are measured under the following condition comprising: cutting a separator specimen strip with a width of 15 mm in a machine direction (MD direction) or a transverse direction (TD direction), stretching the separator specimen strip from $L_0$=100 mm in the direction at a speed of 50 mm/min to 50% elongation, holding for 60 s, leaving it stand to naturally retract for 3 min, then measuring its length $L_1$, and calculating an elastic recovery rate as $(1.5 \times L_0 - L_1) / (0.5 \times L_0) \times 100\%$.

2. The microporous separator for lithium battery according to claim 1, wherein a quantity proportion of polyolefin chain segment ingredients with a weight-average molecular weight below 10000 in the microporous separator is 0.5 mol% - 2.5 mol%, preferably 0.5 mol% - 1.5 mol%.

3. The microporous separator for lithium battery according to claim 1 or 2, wherein the polyolefin resin has a molecular weight distribution of 3-6, preferably 3.5-5.0.

4. The microporous separator for lithium battery according to any one of claims 1 to 3, wherein the microporous separator satisfies one or more of the following:

   a. surface resistance of 0.2 Ω - 0.7 Ω, preferably 0.3 Ω -0.6 Ω;
   b. average pore diameter of 25 nm - 50 nm, preferably 30 nm - 45 nm;
   c. thickness of 1 μm - 30 μm, preferably 4 μm - 12 μm;
   d. air permeability of 10 sec/100cc - 300 sec/100cc, preferably 60 sec/100cc - 170 sec/100cc;
   e. tensile strength in the MD direction or TD direction of 2000 kgf/cm$^2$ - 4000 kgf/cm$^2$, preferably 2800 kgf/cm$^2$ - 4000 kgf/cm$^2$.

5. The microporous separator for lithium battery according to any one of claims 1 to 4, wherein the polyolefin resin is selected from polyethylene (comprising, for example, LDPE, LLDPE, HDPE, UHDPE), polypropylene, polybutene, polymethylpentene, a copolymer thereof, or a mixture thereof.

6. The microporous separator for lithium battery according to any one of claims 1 to 5, wherein the quantity proportion of polyolefin chain segment ingredients with a weight-average molecular weight below 100000 in the polyolefin resin is 10 mol% - 30 mol%, preferably 10 mol% - 25 mol%, more preferably 13 mol% - 25 mol%; and further preferably 13 mol% - 20 mol%.

7. The microporous separator for lithium battery according to any one of claims 1 to 6, wherein the quantity proportion of polyolefin chain segment ingredients with a weight-average molecular weight below 10000 in the polyolefin resin is 0 mol% - 2 mol%, preferably 0.3 mol% - 1.0 mol%.

8. The microporous separator for lithium battery according to any one of claims 1 to 7, wherein the microporous separator is a separator prepared by a wet process.

9. A preparation method for a microporous separator for lithium battery, comprising the following steps:

   (a) melting and blending a mixture containing a polyolefin resin and a plasticizer to form a melt;
   (b) extruding and solidifying the melt into a thick sheet;
   (c) stretching the thick sheet in a machine direction (MD direction) and in a transverse direction (TD direction) to obtain a stretched sheet;

(d) removing the plasticizer from the stretched sheet, and drying to obtain the microporous separator for lithium battery;

wherein, in the polyolefin resin in step (a), a quantity proportion of polyolefin chain segment ingredients with a weight-average molecular weight below 100000 is 10 mol% - 30 mol%, preferably 10 mol% - 25 mol%, more preferably 13 mol% - 25 mol%, and further preferably 13 mol% - 20 mol%; and the polyolefin resin has an intrinsic viscosity index of 800 ml/g - 1600 ml/g, preferably 1000 ml/g - 1300 ml/g.

10. The preparation method according to claim 9, wherein in the polyolefin resin in the step (a), a quantity proportion of polyolefin chain segment ingredients with a weight-average molecular weight below 10000 is 0 mol% - 2 mol%, preferably 0.3 mol% - 1.5 mol%;
further, the polyolefin resin has a molecular weight distribution of 3-6, preferably 3.5-5.0.

11. The preparation method according to claim 9 or 10, wherein the quantity proportion of polyolefin chain segment ingredients with a weight-average molecular weight below 100000 in the microporous separator is 15 mol% - 30 mol%, preferably 15 mol% - 25 mol%, and more preferably 15 mol% -21 mol%;

further, the quantity proportion of polyolefin chain segment ingredients with a weight-average molecular weight below 10000 in the microporous separator is 0.5 mol% - 2.5 mol%, preferably 0.5 mol% - 1.5 mol%;
further, the microporous separator has a machine-direction elastic recovery rate greater than or equal to 14%, preferably greater than or equal to 18%, and a transverse-direction elastic recovery rate greater than or equal to 14%, preferably greater than or equal to 18%, that are measured under the following condition comprising: cutting a separator specimen strip with a width of 15 mm in a machine direction (MD direction) or a transverse direction (TD direction), stretching the separator specimen strip from $L_0$=100 mm in the direction at a speed of 50 mm/min to 50% elongation, holding for 60 s, leaving it stand to naturally retract for 3 min, then measuring its length $L_1$, and calculating an elastic recovery rate as $(1.5 \times L_0 - L_1) / (0.5 \times L_0) \times 100\%$.

12. The preparation method according to any one of claims 9 to 11, wherein a weight ratio of the polyolefin resin to the plasticizer is between 15:85 and 45:55, preferably between 20:80 and 30:70, and more preferably 25:75.

13. The preparation method according to any one of claims 9 to 12, wherein in step (a), an extruder is used for melting and blending, and preferably an extruder temperature is 160 °C - 250 °C and an extruder screw speed is 60 r/min - 100 r/min;
further, in step (b), the mixture is extruded through a die and attached to a casting roller for cooling and solidifying to form a thick sheet, a casting roller temperature being 20 °C - 30 °C.

14. The preparation method according to any one of claims 9 to 13, wherein in step (c), the stretching in the machine direction adopts a stretching temperature of 80 °C - 120 °C and has a stretching ratio of 4-9, preferably 4-7, and the stretching is a multi-point distributed stretching, preferably 3-7 points;
further, a preheating step is provided prior to the stretching in the machine direction, with a temperature of the preheating being 60 °C - 100 °C; preferably, the preheating is a preheating with gradient temperature rise, and the gradient temperature rise of the preheating is set in 2-4 stages, with a temperature difference between two adjacent gradients being 7 °C - 25 °C.

15. The preparation method according to any one of claims 9 to 14, wherein in step (c), the stretching in the transverse direction has a temperature of 90 °C - 125 °C, preferably 90 °C - 115 °C, and a stretching ratio of 4-8, preferably 4-6; and an absolute value of a difference between the stretching ratio in the machine direction and the stretching ratio in the transverse direction is below 1.

16. The preparation method according to any one of claims 9 to 15, wherein in step (d), a step of a second stretching in the transverse direction is further comprised after the drying procedure, and the second stretching in the transverse direction has a stretching temperature of 125 °C - 140 °C, preferably 130 °C - 140 °C, and a stretching ratio of 1.4-1.8.

17. The preparation method according to any one of claims 9 to 16, wherein the polyolefin resin is selected from polyethylene (comprising, for example, LDPE, LLDPE, HDPE, UHDPE), polypropylene, polybutene, polymethylpentene, a copolymer thereof, or a mixture thereof.

## INTERNATIONAL SEARCH REPORT

| International application No. |
| --- |
| **PCT/CN2023/107562** |

**A. CLASSIFICATION OF SUBJECT MATTER**

H01M50/417(2021.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, WPSABS, IEEE: 电池, 多孔, 隔膜, 聚烯烃, 树脂, 粘度, 分子量, 弹性, 回弹, 电阻, 长度, 聚丙烯, 聚乙烯, 石蜡油, 增塑剂, batter+, cell??, porou?, separator, polyolefin, resin, viscosity, molecular W weight, elasticit+, resilience, resistance, length, polypropylene, polyethylene, paraffin W oil, plasticizer, TD, MD

**C. DOCUMENTS CONSIDERED TO BE RELEVANT**

| Category* | Citation of document, with indication, where appropriate, of the relevant passages | Relevant to claim No. |
| --- | --- | --- |
| A | CN 112795066 A (SHANGHAI ENERGY NEW MATERIALS TECHNOLOGY CO., LTD.) 14 May 2021 (2021-05-14) description, paragraphs 0013-0063 | 1-17 |
| A | CN 106981608 A (SHENZHEN SENIOR TECHNOLOGY MATERIAL CO., LTD.) 25 July 2017 (2017-07-25) entire document | 1-17 |
| A | CN 107180939 A (SHENZHEN SENIOR TECHNOLOGY MATERIAL CO., LTD.) 19 September 2017 (2017-09-19) entire document | 1-17 |
| A | CN 106489215 A (SAMSUNG SDI CO., LTD.) 08 March 2017 (2017-03-08) entire document | 1-17 |
| A | JP 2021014572 A (TORAY INDUSTRIES) 12 February 2021 (2021-02-12) entire document | 1-17 |
| A | JP 2008106237 A (ASAHI KASEI CHEMICALS CORP.) 08 May 2008 (2008-05-08) entire document | 1-17 |

☑ Further documents are listed in the continuation of Box C. ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 September 2023** | **21 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/107562** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2010202828 A (ASAHI KASEI E-MATERIALS CORP.) 16 September 2010 (2010-09-16)<br>entire document | 1-17 |

Form PCT/ISA/210 (second sheet) (July 2022)

## INTERNATIONAL SEARCH REPORT
### Information on patent family members

International application No.

**PCT/CN2023/107562**

| Patent document cited in search report | | | Publication date (day/month/year) | Patent family member(s) | | | Publication date (day/month/year) |
|---|---|---|---|---|---|---|---|
| CN | 112795066 | A | 14 May 2021 | None | | | |
| CN | 106981608 | A | 25 July 2017 | CN | 106981608 | B | 11 June 2021 |
| CN | 107180939 | A | 19 September 2017 | CN | 107180939 | B | 02 April 2021 |
| CN | 106489215 | A | 08 March 2017 | KR | 20160002447 | A | 08 January 2016 |
| | | | | JP | 2017523570 | A | 17 August 2017 |
| | | | | JP | 6818557 | B2 | 20 January 2021 |
| | | | | WO | 2016003094 | A1 | 07 January 2016 |
| JP | 2021014572 | A | 12 February 2021 | None | | | |
| JP | 2008106237 | A | 08 May 2008 | None | | | |
| JP | 2010202828 | A | 16 September 2010 | JP | 5546144 | B2 | 09 July 2014 |

Form PCT/ISA/210 (patent family annex) (July 2022)